# EUROPEAN PATENT SPECIFICATION

(11) **EP 4 489 152 B1**
(45) Date of publication and mention of the grant of the patent: **21.01.2026**
(21) Application number: 24160405.7
(22) Date of filing: 29.02.2024
(51) Int. Cl.: H01M 8/18

(54) **REVERSIBLE SOLID OXIDE CELL SYSTEM**
REVERSIBLES FESTOXIDBRENNSTOFFZELLENSYSTEM
SYSTÈME DE PILE À COMBUSTIBLE EN OXYDE SOLIDE RÉVERSIBLE

(30) Priority: 05.07.2023 KR 20230086862; 28.11.2023 KR 20230168675
(43) Date of publication of application: 08.01.2025
(73) Proprietor: FCI Co., Ltd., Daejeon 34036 (KR)
(72) Inventor: Wei, Xinyi, 1950 Sion (CH); Sharma, Shivom, 1997 Haute-Nendaz (CH); Marechal, Francois, 1950 Sion (CH); Van herle, Jan, 1027 Lonay (CH); Lee, Tae Won, Goyang-si, Gyeonggi-do (KR); Ryu, Bo Hyun, Daejeon (KR); Jo, Seung Hwan, Ulsan (KR); Won, Myung Jun, Daejeon (KR)
(74) Representative: Isarpatent

(56) References cited:
- DE-A1- 102018 007 001
- DE-A1- 102020 006 326

## Description

### BACKGROUND OF THE INVENTION

### Field of the Invention

The present invention relates to a reversible solid oxide cell system. More specifically, the present invention relates to a reversible solid oxide cell system that selectively operates in a fuel cell mode that produces electricity from methane as fuel if electricity production is needed, and an electrolyzer mode that produces methane by reacting carbon dioxide with hydrogen obtained by electrolyzing water with renewable electricity, wherein the two modes share a hybrid tank storing methane and carbon dioxide to provide efficient production and storage of energy.

### Description of the Related Art

Recently, in response to the trend of the new climate system, Korea has established a long-term plan to increase renewable energy generation to 20% of total power generation by 2030 through gradual reduction in nuclear power and coal power generation and to reduce 37% of the greenhouse gas emissions forecasts (BAU) based thereon.

However, the expansion of the proportion of renewable energy in the power systems for the major energy conversion policy of the government causes problems of reduced stability and efficiency in power system operation because unutilized power is generated due to the imbalance between supply and demand in power systems where power must be produced and consumed simultaneously, and limitations in power grid capacity that results from the intermittent nature of major renewable energy sources such as solar and wind power and the resulting output variations.

As a result, in Europe, which has recently taken the lead in the spread of renewable energy, power to gas (P2G) has been actively researched to produce hydrogen (H₂) through water electrolysis using unused electricity, or to react the produced hydrogen with carbon dioxide (CO₂), a representative greenhouse gas, to produce methane (CH₄), which is used as fuel, in an attempt to compensate for fundamental limitations such as low stability and efficiency of renewable energy.

In particular, carbon dioxide methanation using carbon dioxide solves the problems of deterioration in stability and efficiency of power systems due to the expansion of renewable energy supply through storage and recycling of unused power, and reduces greenhouse gases by utilizing carbon dioxide, the main cause of global warming, thus being in the spotlight along with the expansion of renewable energy supply.

Disadvantageously, conventional fossil fuel-based solid oxide cells fail to reduce greenhouse gas because they inevitably generate carbon dioxide and, in carbon dioxide methanation, obtain hydrogen by electrolyzing water in an electrolyzer mode to supply the hydrogen required for methanation.

However, electricity should be supplied consistently for water electrolysis and renewable energy is often used to supply electricity. However, the amount of electricity generated from renewable energy is not constant due to the intermittent electricity generation thereof and thus it is difficult for renewable energy to stably start the electrolyzer mode. For this reason, an energy storage system (ESS) may be also used to compensate for the unstable electricity generation of renewable energy, but this entails enormous costs.

### Prior Art

### Patent Document

(Patent Document 1) KR Patent No. 1982021 (2019.05.20)

DE 10 2020 006326 discloses the process of reversibly producing/ reacting H2 in a reversible SOFC and converting produced H2 to CH4 with CO2 accumulated during FC mode.

### SUMMARY OF THE INVENTION

Therefore, the present invention has been made in view of the above problems, and it is an object of the present invention to provide a reversible solid oxide cell system that selectively operates in a fuel cell mode that produces electricity from methane as fuel if electricity production is needed, and an electrolyzer mode that produces methane by reacting carbon dioxide with hydrogen obtained by electrolyzing water with renewable electricity using a reversible solid oxide cell, wherein the modes share a hybrid tank storing methane and carbon dioxide to selectively supply methane and carbon dioxide required for the fuel cell mode and the electrolyzer mode and thereby increases overall efficiency.

In an attempt to accomplish the objects, the present invention is directed to a reversible solid oxide cell system.

In accordance with an aspect of the present invention, there is provided a reversible solid oxide cell system including a hybrid tank configured to store methane and carbon dioxide isolated by an adjustable partition, and a reversible solid oxide cell (rSOC), the reversible solid oxide cell (rSOC) including a methanator configured to produce methane by reaction of the carbon dioxide in the hybrid tank with hydrogen produced by electrolysis of water using electricity generated in a stack and to supply methane to a first area, in an electrolyzer mode, and a reformer configured to reform the methane in the hybrid tank and to supply the methane to the stack, in a fuel cell mode.

The reversible solid oxide cell (rSOC) may further include an ejector provided between the methanator and the stack, and configured to mix hydrogen from the stack with carbon dioxide from the hybrid tank, to compress the resulting mixture and to supply the result to the methanator, in the electrolyzer mode.

The reversible solid oxide cell (rSOC) may further include a water separator provided at a rear of the methanator and configured to separate water from the exhaust gas of the methanator and to supply the result to the water tank, in the electrolyzer mode.

The reversible solid oxide cell (rSOC) may further include a heater configured to heat water supplied from the water separator or the water tank to the stack for use in electrolysis in the electrolyzer mode.

The reversible solid oxide cell (rSOC) may further include an oxygen tank configured to receive and store oxygen produced through electrolysis of water in the electrolyzer mode.

A part of an unreacted substance contained in the exhaust gas of the stack in the reversible solid oxide cell may be renewable to the reformer, may be reformed by the reformer and may be re-supplied to the stack in the fuel cell mode.

The reversible solid oxide cell (rSOC) may further include a burner configured to burn the exhaust gas of the stack using, as an oxidizing agent, the oxygen in the oxygen tank in the fuel cell mode.

The reversible solid oxide cell (rSOC) may further include a water separator configured to separate water from a burning chamber of the burner, wherein the water separated by the water separator is used in the electrolyzer mode of the reversible solid oxide cell.

Carbon dioxide contained in the exhaust gas of the burner from which moisture is separated by the water separator may be stored in the hybrid tank in the fuel cell mode.

A part of the unreacted substance contained in the exhaust gas of the stock in the reversible solid oxide cell may be renewable to the stack and used as fuel in the fuel cell mode.

The storage capacity of the methane and carbon dioxide in the hybrid tank may be changed by movement of the partition.

Water may be electrolyzed using a renewable energy source supplied from the outside in the electrolyzer mode, and the reversible solid oxide cell (rSOC) may include a power compensator configured to constantly regulate the power supplied to the electrolyzer mode using at least one of an external electricity grid or a battery temporarily storing electricity produced in the fuel cell mode, and the renewable energy source.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic flow diagram illustrating a reversible solid oxide cell system according to an embodiment of the present invention;
FIG. 2 illustrates an operation of an electrolyzer mode of the reversible solid oxide cell system according to the embodiment of the present invention;
FIG. 3 illustrates an operation of a fuel cell mode of the reversible solid oxide cell system according to the embodiment of the present invention; and
FIG. 4 illustrates the overall flow of the electrolyzer mode and the fuel cell mode in the reversible solid oxide cell system according to the embodiment of the present invention.

### DETAILED DESCRIPTION OF THE INVENTION

Hereinafter, some embodiments of the present invention will be described in detail with reference to the drawings. However, these embodiments should not be construed as limiting the scope of the present invention.

Singular forms are intended to include plural forms as well, unless the context clearly indicates otherwise.

As used herein, the terms "comprise" and/or "have" may specify the presence of other elements, but do not preclude the presence or addition of other elements unless the context clearly indicates otherwise.

As used herein, the terms "unit", "module", and "component" mean an element that performs at least one function or operation and may be implemented by hardware, software, or a combination of hardware and software.

As used herein, the term "connected" may mean that two components are directly connected or are connected via at least one component arranged therebetween.

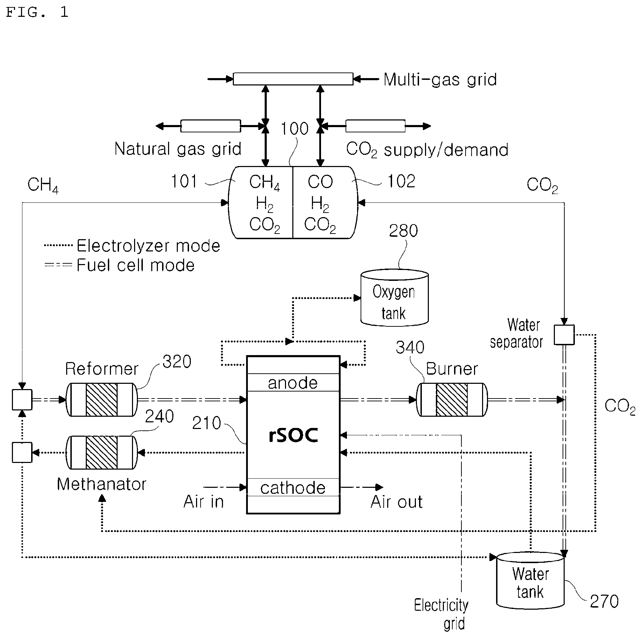

FIG. 1 is a schematic flow diagram illustrating a reversible solid oxide cell system according to an embodiment of the present invention.

The reversible solid oxide cell system selectively operates, as needed, in a fuel cell mode that produces electricity from methane as fuel, and an electrolyzer mode that produces methane by reacting hydrogen obtained by electrolyzing water using a supplied energy source with carbon dioxide supplied from the outside (e.g., hybrid tank 100), wherein the modes share a hybrid tank storing methane and carbon dioxide to provide efficient energy production and storage.

The energy source supplied to the electrolyzer mode may be electricity supplied through an external electricity grid, or a renewable energy source (or renewable electricity) generated by natural force such as wind, sunlight, river water, ocean currents, and solar heat.

In addition, the energy source supplied to the electrolyzer mode may also be a battery (not shown in the drawing) that temporarily stores electricity generated in the fuel cell mode.

The electrolyzer mode of the solid oxide cell system uses a renewable energy source (renewable electricity) as a primary electricity source and supplements an insufficient amount of electricity from the battery storing electricity generated in the fuel cell mode or from an external electricity grid if the supply of renewable energy source is lower than the amount of electricity required for the electrolyzer mode.

For example, when the solid oxide cell system operates in the electrolyzer mode all day, it receives renewable electricity generated by solar or wind power during the day, and receives electricity from the battery storing electricity previously generated in the fuel cell mode or from an external electricity grid during the night.

The solid oxide cell system receives carbon dioxide from the hybrid tank in the electrolyzer mode and produces methane by reaction of hydrogen produced by electrolysis of water using renewable electricity or electricity supplied through the electricity grid (or electricity from a battery) with the supplied carbon dioxide and stores the methane in the hybrid tank 100. In this case, the methane may be produced by a methanator 240.

When water is electrolyzed in the electrolyzer mode, oxygen is also produced, and the oxygen may be separately stored in an oxygen tank 280 and used in the fuel cell mode.

The fuel cell mode of the solid oxide cell system reforms the methane produced in the electrolyzer mode and stored in the hybrid tank 100 to produce hydrogen and generates electricity using the hydrogen.

In the fuel cell mode, a burner 340 provided at the rear of the stack 210 burns the exhaust gas of the stack 210 using oxygen separated through electrolysis in the electrolyzer mode as an oxidizing agent. The exhaust gas burned in the burner 340 contains high proportions of carbon dioxide and water. The carbon dioxide is separated and stored in the hybrid tank 100, whereas the water is stored in the water tank 270 to electrolyze water in the electrolyzer mode.

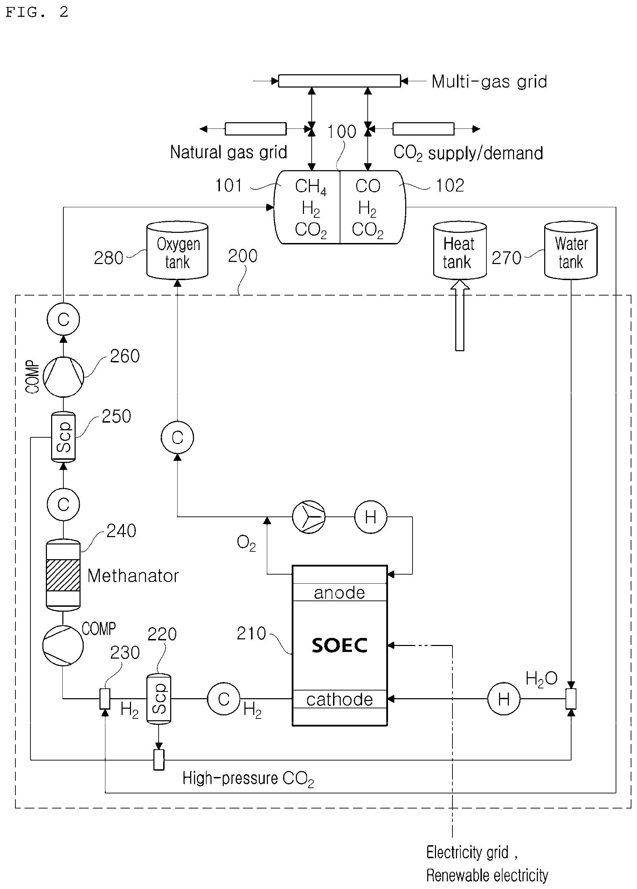

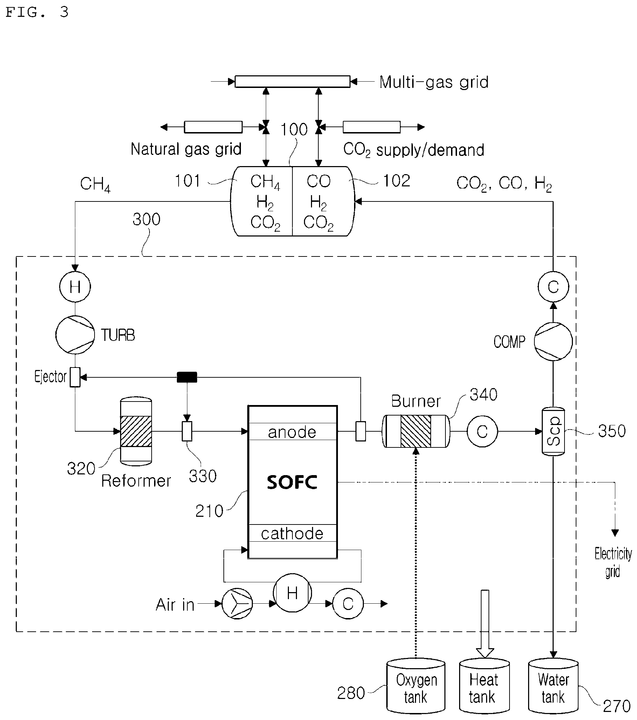

Hereinafter, the electrolyzer mode and the fuel cell mode of the solid oxide cell system will be described with reference to FIGS. 2 and 3.

FIG. 2 illustrates an operation of the electrolyzer mode of the reversible solid oxide cell system according to the embodiment of the present invention.

As shown in FIG. 2, the reversible solid oxide cell system includes a hybrid tank 100 and a reversible solid oxide cell 200.

The hybrid tank 100 includes a first area 101 and a second area 102 that are isolated from each other. The first area 101 and the second area 102 of the hybrid tank 100 may be divided by an adjustable partition.

Methane is stored in the first area 101 of the hybrid tank 100.

The methane stored in the first area 101 may be methane produced in the electrolyzer mode of the reversible solid oxide cell 200. For reference, small amounts of hydrogen and carbon dioxide unreacted in the electrolyzer mode may also be stored in the first area 101 of the hybrid tank 100.

When the amount of methane produced in the electrolyzer mode is insufficient, the hybrid tank 100 may receive methane from the outside and supply methane to the stack 210 in the fuel cell mode.

For example, when the amount of methane produced in the electrolyzer mode is insufficient, the hybrid tank 100 may receive methane from the outside through a natural gas grid or a multi-gas grid.

On the other hand, when the amount of methane produced in the electrolyzer mode is high, the methane may be supplied to the outside through the natural gas grid or the multi-gas grid.

Carbon dioxide is stored in the second area 102. Carbon dioxide may be compressed to high pressure and stored in the second area 102.

The carbon dioxide stored in the second area 102 is used to produce methane by reacting carbon dioxide with hydrogen produced through water electrolysis in the electrolyzer mode.

The carbon dioxide may be carbon dioxide separated from the exhaust gas of a stack 210 in the fuel cell mode. For reference, small amounts of unreacted hydrogen and carbon monoxide in the exhaust gas of the stack 210 in the fuel cell mode may also be stored in the second area 102 of the hybrid tank 100.

That is, the hybrid tank 100 supplies carbon dioxide from the second area 102 to the reversible solid oxide cell 200 so that the carbon dioxide can be used as fuel in the electrolyzer mode of the reversible solid oxide cell 200 and stores the methane produced by the methanation in the first area 101. In addition, the hybrid tank 100 supplies the methane from the first area 101 to the reversible solid oxide cell 200 so that it can be used as fuel in the fuel cell mode of the reversible solid oxide cell 200, and stores carbon dioxide, which is one of products of the stack 210, in the second area 102.

When the amount of carbon dioxide stored in the fuel cell mode is greater than the capacity of the hybrid tank 100, the hybrid tank 100 may supply carbon dioxide to the outside through a multi-gas grid or a carbon dioxide supply grid.

On the other hand, when the amount of carbon dioxide stored in the fuel cell mode is less than the capacity of the hybrid tank 100, the hybrid tank 100 may receive carbon dioxide from the outside through a multi-gas grid or carbon dioxide supply grid.

Meanwhile, the first area 101 and the second area 102 of the hybrid tank 110 may be divided by an adjustable partition.

The partition of the hybrid tank 110 changes the storage capacity of the first area 101 and the second area 102.

For example, the partition of the hybrid tank 110 may reduce the capacity of the second area 102 instead of increasing the capacity of the first area 101 when the amount of methane produced in the electrolyzer mode is great.

In addition, the partition of the hybrid tank 110 may reduce the capacity of the second area 102 instead of increasing the capacity of the first area 101 when the capacity of carbon dioxide captured in the fuel cell mode is small.

The reversible solid oxide cell 200 (rSOC) may have different operating configurations depending on the electrolyzer mode and the fuel cell mode and the following description will be based on configurations operating in the electrolyzer mode.

The reversible solid oxide cell 200 includes a stack 210, a first water separator 220, a first ejector 230, a methanator 240, a second water separator 250, a compressor 260, a water tank 270 and an oxygen tank 280.

In the electrolyzer mode, the stack 210 electrolyzes pure water using electrical energy supplied from the electrical grid to produce hydrogen and oxygen.

For example, the electrolyzer mode may electrolyze water using electricity supplied through an external electricity grid, or may electrolyze water using renewable electricity generated through a power generation means powered by natural forces such as wind, sunlight, river water, ocean currents, and solar heat, or may electrolyze water using electricity supplied from a battery (not shown in the drawing) that temporarily stores electricity produced in the fuel cell mode.

The electrolyzer mode operates at a temperature from 500 to 850°C at which high temperature electrolysis occurs.

In the reversible solid oxide cell 200, water vapor as a reactant flows into an anode and, when voltage is applied to a cathode, water vapor decomposes and a water molecule is split into hydrogen and oxygen.

The reversible solid oxide cell 200 supplies oxygen obtained through electrolysis of water to an oxygen tank 280 through an oxygen electrode output terminal, and supplies hydrogen to the first water separator 220 disposed at the rear of a hydrogen electrode output terminal.

Since the electrolyzer mode uses electricity produced in the fuel cell mode of the reversible solid oxide cell 200, a device to supply electricity is not required and thus energy efficiency can be improved.

The first water separator 220 separates moisture partially contained in the hydrogen supplied from the stack 210.

The moisture separated by the first water separator 220 is renewable to the stack 210 and electrolyzed. A heater (not represented by reference numeral) to heat the water renewable from the first water separator 220 to the stack 210 into steam may be further provided.

The first ejector 230 receives hydrogen through the first water separator 220 from the stack 210, receives carbon dioxide from the hybrid tank 100 and mixes the hydrogen with the carbon dioxide.

The hydrogen and carbon dioxide mixed by the first ejector 230 are compressed and supplied to the methanator 240. For reference, the methanation of the methanator 240 requires a high pressure and the first ejector 230 reduces the compression force required before methanation using the pressure of carbon dioxide highly compressed in the hybrid tank 100.

The methanator 240 produces methane by reaction of supplied carbon dioxide with hydrogen.

The methanation from carbon dioxide by the methanator 240 may be a thermochemical methanation using a nickel-based solid catalyst or a biological methanation using microorganisms, depending on the type of catalyst for reaction between carbon dioxide and hydrogen.

The thermochemical methanation requires maintenance of high operating pressure (10 bar~) and temperature (300 to 550°C) for thermochemical catalysis. For reference, the operating pressure may be the pressure of high-pressure carbon dioxide in the hybrid tank 100, or may be applied by a separate compressor.

When the methanation is performed using a Ni, Co, or Ni-Co catalyst, the H₂O produced by the methanation may cause water gas conversion at high temperatures, producing carbon dioxide in addition to methane, and the produced carbon dioxide may be stored in the first area 101 of the hybrid tank 100.

The biological methanation uses microorganisms of producing methane as biocatalysts for the reaction of carbon dioxide and hydrogen, and has high energy efficiency due to low operating pressure (0~10 bar) and temperature (20~70°C) compared to thermochemical methanation.

The second water separator 250 separates moisture from the methane produced by the methanator 240. For reference, the methane gas discharged from the methanator has a high temperature and thus may be cooled before supplied to the second water separator 250.

The moisture separated by the second water separator 250 is renewable to the stack 210 and electrolyzed. A heater (not represented by reference numeral) to heat the water renewable from the second water separator 250 to the stack 210 into steam may be further provided.

The compressor 260 compresses the methane from which water has been separated by the second water separator 250. The moisture compressed by the compressor 260 may be cooled and stored in the hybrid tank 100.

The water tank 270 supplies water for electrolysis in the stack 210. As described above, the water stored in the water tank 270 may be water separated from the exhaust gas of the stack 210 in the fuel cell mode. The water tank 270 may supply water for electrolysis to the stack 210 in the electrolyzer mode, and a heater to heat the water supplied from the water tank 270 (not represented by reference numeral) may be provided between the water tank 270 and the stack 210.

The oxygen tank 280 stores oxygen produced by electrolyzing water in the electrolyzer mode.

The oxygen in the oxygen tank 280 may be supplied to the burner 340 provided at the rear of the stack 210 in the fuel cell mode and may be used as an oxidizing agent for burning.

Meanwhile, the solid oxide cell 200 may further include a power compensator (not shown in the drawing).

The power compensator adjusts power supply to the renewable energy source (renewable electricity) and an external electricity grid or battery to facilitate electrolysis in the electrolyzer mode of the solid oxide cell 200. For reference, the battery temporarily stores electricity produced in the fuel cell mode.

In one embodiment, the power compensator primarily allows the renewable energy source to be used in the electrolyzer mode through the electricity grid, but controls the output of the renewable energy source to supplement an insufficient amount of electricity from the electricity grid (or battery) when the supply of renewable energy source is lower than the electricity required for the electrolyzer mode. In this regard, the power compensator may be considered a controller (not shown in the drawing) of the solid oxide cell 200.

Meanwhile, the solid oxide cell 200 may be further provided with a heat tank (not represented by reference numeral).

The heat tank may store the heat of exhaust gas from the cathode (air electrode) in the fuel cell mode of the solid oxide cell 200 and may be used in the electrolyzer mode.

The heat source stored in the heat tank may be used to convert water into steam in the electrolyzer mode. In addition, the heat source stored in the heat tank may supplement the heat source required for other configurations.

FIG. 3 illustrates an operation of the fuel cell mode of the reversible solid oxide cell system according to the embodiment of the present invention.

As shown in FIG. 3, the system includes a hybrid tank 100 and a reversible solid oxide cell 200.

The hybrid tank 100 is the same as the hybrid tank 100 of FIG. 2 and thus duplicate description will be omitted.

The description of the reverse operating solid oxide cell 200 (rSOC) will be given based on the operating configuration in the fuel cell mode.

The reversible solid oxide cell 200 includes a third ejector 310, a reformer 320, a fourth ejector 330, a stack 210, a burner 340, a third water separator 350, and a water tank 270.

The third ejector 310 mixes methane supplied from the hybrid tank 100 with methane, hydrogen, carbon dioxide, carbon monoxide, and moisture-based gases renewable from the exhaust gas of the stack 210. The third ejector 310 supplies the mixed gas to the reformer 320. The third ejector 310 provides a required steam-to-carbon ratio to the reformer 320 through the renewable exhaust gas of the stack 210.

The reformer 320 reforms the supplied methane-based fuel to produce hydrogen.

A Ni-based catalyst is used as a catalyst in the reformer 320 and serves to decompose C2+ hydrocarbons contained in the reaction raw materials (or fuel) into CH₄, CO, H₂, or the like to thereby inhibit coke production (or carbon deposition) due to reforming of higher hydrocarbons. Coke production is related to the amount of water vapor and is determined by the steam-to-carbon ratio (S/C). When S/C is excessively low, the possibility of coke formation increases.

The fuel (reformate fuel) primarily reformed by the reformer 320 is converted to H₂ at the anode of the stack 210 through direct internal reforming, that is, steam methane reforming and water-gas shift. The H₂ produced thus is converted into electricity through an electrochemical reaction.

Hydrogen produced by reforming by the reformer 320 is supplied to the stack 210 via the fourth ejector 330. For reference, the exhaust gas of the reformer 320 may contain small amounts of unreacted carbon monoxide, carbon dioxide, methane, and moisture in addition to the produced hydrogen.

The fourth ejector 330 mixes the exhaust gas of the reformer 320 with the methane-based gas renewable from the exhaust gas of the stack 210 and supplies the exhaust gas to the anode of the stack 210. The fourth ejector 330 does not require a heat exchanger to heat the fuel supplied to the stack 210 because the renewable exhaust gas of the stack 210 is mixed with the reformed gas (fuel), thus resulting in cost efficiency and efficient use of power.

The stack 210 includes an anode with an anode input and an anode output, and a cathode with a cathode input and a cathode output.

The stack 210 receives heated external air through the cathode and receives heated fuel through the anode.

For example, preheated air is supplied to the cathode, oxygen ions produced at the cathode move to the anode through the electrolyte, and an electrochemical reaction between H₂ and O₂ occurs at the triple-phase boundary of the anode. Electricity is generated through this reaction.

The high-temperature exhaust gas exhausted from the cathode of the stack 210 may be used to heat air input to the cathode through a heat exchanger, and then cooled and discharged to the outside.

A portion of the anode exhaust gas of the stack 210 is supplied to the third ejector 310 and the fourth ejector 330, and the remainder is supplied to the burner 340 for burning.

The burner 340 burns the anode exhaust gas of the stack 210 using oxygen supplied from the oxygen tank 280. For reference, the oxygen of the oxygen tank 280 is oxygen produced by electrolysis of water in the electrolyzer mode of the reversible solid oxide cell 200.

For example, the exhaust gas discharged through the anode outlet of the stack 210 contains products, CO₂ and H₂O, and unreacted fuels, H₂, CO, and CH₄. Unreacted fuels such as H₂ and CO are burned with oxygen in the burner 340. During burning, the unreacted fuels are converted into CO₂, and H₂ is converted into H₂O. For this reason, the exhaust gas of the burner 340 contains high proportions of CO₂ and H₂O, and small amounts of unreacted H₂ and CO.

Combustion heat generated by the burner 340 may be stored in a heat tank (not represented by reference numeral). The heat stored in the heat tank may be used to heat the water supplied to the stack 210 in the electrolyzer mode and convert the water into steam.

The third water separator 350 separates moisture from the burning gas of the burner 340.

The third water separator 350 may use either centrifugal water separation or inversion-type water separation. The centrifugal water separation rotates steam by a cyclone separator and separates moisture through centrifugal force. The inversion-type water separation separates moisture by rapidly changing the direction of steam movement using a baffle plate or the like.

Since most of the moisture has been removed from the burning gas of the burner 340 while the burning gas passes through the water separator, the burning gas has a very high proportion of carbon dioxide and thus is rich in CO₂. For reference, the burning gas of the burner 340 may contain a high amount of carbon dioxide and small amounts of H₂ and CO. Even small amounts of H₂ and CO may be stored in the hybrid tank 100.

The burning gas of the burner 340 from which the water has been separated is compressed, cooled and is then stored in the second area 102 of the hybrid tank 100 and supplied for methanation in the electrolyzer mode.

The water tank 270 stores moisture separated by the water separator. The moisture stored in the water tank 270 is heated and then supplied as steam for electrolysis in the electrolyzer mode.

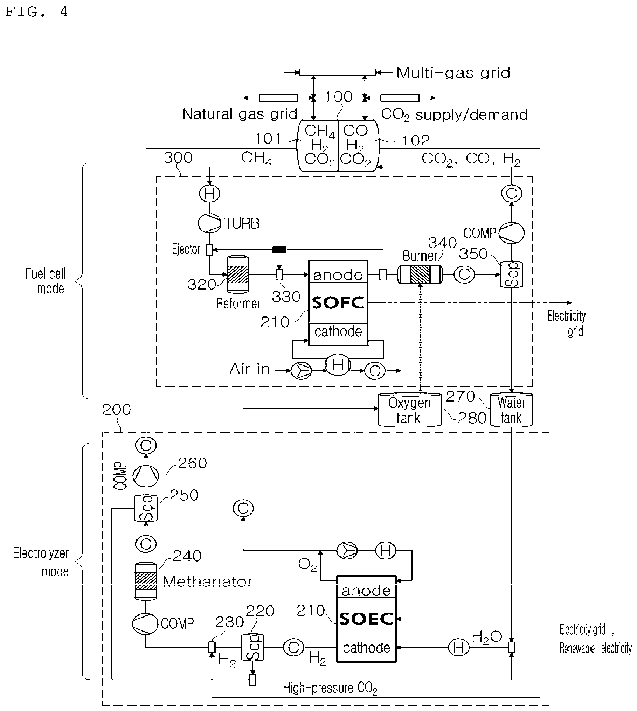

FIG. 4 illustrates the overall flow of the electrolyzer mode and the fuel cell mode in the reversible solid oxide cell system according to the embodiment of the present invention.

First, the electrolyzer mode will be described with reference to FIG. 4**.** Water (0.134 mol/s) supplied from the water tank 270 is heated to 25 to 750°C by a heater and then supplied to the stack 210 for electrolysis. For reference, the stack 210 operates at 1 bar, the input temperature of the water vapor is about 750°C, and the output temperature of water vapor is about 745°C.

The stack 210 obtains hydrogen and oxygen obtained by electrolyzing water as a supplied energy source.

For example, the electricity required for electrolysis by the stack 210 may be electricity supplied through an external electricity grid, or may be an energy source (renewable electricity) generated through a power generation means powered from natural forces such as wind, sunlight, river water, ocean currents, or solar heat. In addition, the stack 210 may receive electricity from a battery (not shown in the drawing) that temporarily stores electricity produced in fuel cell mode.

To realize these technical features, the present embodiment may further include a power compensator. The power compensator adjusts power supply to a renewable energy source (renewable electricity), an external electricity grid, or a battery to facilitate electrolysis in the electrolyzer mode of the solid oxide cell 200.

In one embodiment, the power compensator primarily allows the renewable energy source to be used in the electrolyzer mode through the electricity grid, but controls the output of the renewable energy source to supplement an insufficient amount of electricity to the electricity grid (or battery) when the supply of renewable energy source is lower than the electricity required for the electrolyzer mode.

Oxygen produced by electrolysis of water in the stack 210 is discharged to the anode, primarily cooled from 745°C to 120°C (duty = 10.46 kW), and secondarily cooled from 120°C to 25°C (load = 0.17 kW). Some of the oxygen is stored in the oxygen tank 280, whereas the other thereof is renewable through the air blower (duty = 0.425 kW, 1-1.2 bar) and the heater (duty = 9.16 kW, 130-750°C) upon input to the stack 210.

After the vapor is electrolyzed inside the stack 210, the exhaust gas output from the cathode contains H₂ and a small amount of vapor. The exhaust gas (H₂, a small amount of steam) in the stack 210 is cooled by a cooler from 745°C to 50°C and releases 2.81 kW of heat.

The exhaust gas (H₂, a small amount of steam) in the primary cooled stack 210 is further secondarily cooled from 50°C to 25°C to release 0.56 kW of heat, and about 0.014 mol/s of water is condensed in the first water separator 220, renewable again, and supplied upon input to the stack 210.

The exhaust gas of the stack 210, from which moisture has been separated by the first water separator 220, contains H₂, and the first ejector 230 mixes 0.032 mol/s of high-pressure CO₂ and CO supplied from the hybrid tank 100, with H₂ contained in the exhaust gas of the stack 210.

The pressure of the mixture (CO₂, CO, H₂) is increased from 1 bar to 6 bar in the first ejector 230 and then is increased from 6 bar to 15 bar while passing through the compressor (not shown).

The high-pressure mixture having an increased pressure is supplied to the methanator 240, and CO₂ reacts with H₂ at 280°C to produce CH₄. For reference, the methanation is an exothermic reaction and releases 4.91kW of heat at 280°C. The exhaust gas of the methanator 240 may contain small amounts of H₂ and CO₂ in addition to the products CH₄ and H₂O. The H₂ and CO₂ may also be stored in the hybrid tank 100.

The second water separator 250 cools the exhaust gas of the methanator 240 from 280°C to 178°C (duty = 0.39 kW) to condense moisture, and further cools the exhaust gas to 178 to 25°C (duty = 3.18 kW). About 0.058 mol/s of water is condensed by the second separator 250, is input to the cathode of the stack 210 for water electrolysis and then renewable. Since water is renewable by the first water separator 220 and the second water separator 250, the amount of water used in the water tank 270 may be reduced to 0.062 mol/s.

The methane gas of the second water separator 250 is compressed from 15 bar to 75 bar by the compressor (not represented by reference numeral). At this time, a power of 0.25 kW may be consumed. The compressed methane gas is cooled from 207°C to 25°C by a cooler (duty = 0.26 kW) and then stored in the hybrid tank 100.

Meanwhile, the reversible solid oxide cell 200 may be further provided with an electric heater. An electric heater may have a power consumption of 0.28 kW. The electric heater may be used to heat oxygen input to the anode of the stack 210 or to further heat steam supplied to the cathode of the stack 210.

The fuel cell mode operates when power demand is needed.

Methane and small amounts of carbon and hydrogen stored in the hybrid tank 100 are heated from 25°C to 230°C at 75 bar by a heater before being supplied to the reformer 320 (load = 0.16 kW). In addition, the heated methane gas is supplied to the reformer 320 operating at a pressure of 8.5 bar, after the pressure is decreased from 75 bar to 15 bar by a turbine.

For reference, the temperature for partial external reforming is 550°C and the maximum internal reforming rate at which the stack 210 can handle is about 0.9 and thus the optimal external steam methane reforming rate is 0.1. Considering the endothermic property of methane reforming, as the internal reforming rate increases, air required to cool the stack 210 decreases. By operating the reformer 320 at a high pressure, a low external reforming rate can be obtained and the cost of special catalysts used for steam methane reforming can be reduced.

The mixed gas supplied from the reformer 320 to the stack 210 contains CH₄, H₂, CO₂, H₂O, and CO. In addition, the stack 210 generates 10 kW of power using the mixed gas as fuel.

For reference, the fuel utilization rate of the stack 210 may be set to 0.85, the input temperature of the stack 210 is about 710°C, and the output temperature of the stack 210 is a high temperature of about 810°C. The exhaust gas discharged from the anode outlet of the stack 210 contains CO₂ and H₂O as products and H₂, CO, and CH₄ as unreacted fuels, and is renewable to a third ejector 310 provided at the front end of the reformer 320, and to a fourth ejector 330 at the rear end of the reformer 320.

The third ejector 310 mixes methane supplied from the hybrid tank 100 with methane-based gas recirculated from the exhaust gas of the stack 210. The third ejector 310 supplies the mixed gas to the reformer 320. In addition, the third ejector 310 provides a steam-to-carbon ratio required for the reformer 320.

The fourth ejector 330 mixes the renewable exhaust gas of the stack 210 with the reformed gas (fuel), thus eliminating the necessity of a heat exchanger required to heat the fuel supplied to the stack 210 and thus resulting in cost efficiency and efficient use of power.

The high-temperature exhaust gas exhausted from the cathode of the stack 210 may be used to heat air input to the cathode through the heat exchanger and then cooled and discharged to the outside.

Specifically, the exhaust gas (0.98 mol/s) at the cathode of the stack 210 exchanges heat with the fresh air supplied to the cathode input of the stack 210, and thus being heated from about 35°C to about 710°C while releasing 23.77 kW of heat. In addition, the exhaust gas of the heat exchanged stack 210 is finally cooled from 126°C to 50°C (load = 2.48 kW) before being discharged to the outside.

The gas remaining at the cathode is cooled from 810°C to 90°C (duty = 1.54 kW) and then further cooled from 90°C to 25°C (duty = 1.63 kW) and thus 0.033 mol/s of water is condensed in the water separator.

The burner 340 burns the exhaust gas at the anode of the stack 210 using oxygen supplied from the oxygen tank 280. For reference, the oxygen in the oxygen tank 280 is oxygen produced by electrolysis of water in the electrolyzer mode of the reversible solid oxide cell 200.

For example, the exhaust gas discharged through the anode outlet of the stack 210 contains CO₂ and H₂O as products and H₂, CO, and CH₄ as unreacted fuels. Unreacted fuels such as H₂ and CO are burned with oxygen in the burner 340. At this burning process, CO is converted into CO₂, whereas H₂ is converted into H₂O. As a result, the exhaust gas of the burner 340 contains high proportions of CO₂ and H₂O, and small amounts of unreacted H₂ and CO.

The third water separator 350 separates moisture from the burning gas of the burner 340.

Since most of the moisture has been removed from the burning gas of the burner 340 while the burning gas passes through the water separator, the burning gas has a very high proportion of carbon dioxide and thus is rich in CO₂. For reference, the burning gas of the burner 340 may contain a high amount of carbon dioxide and small amounts of H₂ and CO. Small amounts of H₂ and CO may also be stored in the hybrid tank 100.

Before the moisture-separated burning gas of the burner 340 is stored in the hybrid tank 100, the pressure of the moisture-free burning gas is increased from 1 bar to 75 bar by a compressor and cooler. The moisture-free burning gas from the burner 340 is compressed, cooled from 150°C to 25°C and then stored in the hybrid tank 100.

The overall efficiency of the reversible solid oxide cell system is 64.2%, but system efficiency can be improved to 78% using 4.06 kW of waste heat at 270°C, 0.3 kW of waste heat at 100°C, and about 3.4 kW of waste heat at 700°C.

As apparent from the foregoing, according to an embodiment of the present invention, an electrolyzer mode uses electricity produced in a reverse solid oxide cell and thus does not require a separate device for supplying electricity, thereby improving energy efficiency.

According to an embodiment of the present invention, methane and carbon dioxide are stored in the same tank, a partition allowing for material movement is present, and the amounts of methane and carbon dioxide are easily adjusted depending upon production and consumption demand when used within a reversible loop.

According to an embodiment of the present invention, the storage space in the hybrid tank may be varied depending on the amount of carbon dioxide captured in the fuel cell mode and the amount of methane produced in the electrolyzer mode.

According to an embodiment of the present invention, waste heat generated in the fuel cell mode is stored and then used to generate steam in the electrolyzer mode, thereby improving heat efficiency.

## Claims

1. A reversible solid oxide cell system comprising:
a hybrid tank configured to store methane and carbon dioxide isolated by an adjustable partition; and
a reversible solid oxide cell (rSOC),
the reversible solid oxide cell (rSOC) comprising:
a methanator configured to produce methane by reaction of the carbon dioxide in the hybrid tank with hydrogen produced by electrolysis of water using electricity generated in a stack and to supply methane to a first area, in an electrolyzer mode; and
a reformer configured to reform the methane in the hybrid tank and to supply the methane to the stack, in a fuel cell mode.

2. The reversible solid oxide cell system according to claim 1, wherein the reversible solid oxide cell (rSOC) further comprises:
an ejector provided between the methanator and the stack, and configured to mix hydrogen from the stack with carbon dioxide from the hybrid tank, to compress the resulting mixture and to supply the result to the methanator, in the electrolyzer mode.

3. The reversible solid oxide cell system according to claim 1, wherein the reversible solid oxide cell (rSOC) further comprises:
a water separator provided at a rear of the methanator and configured to separate water from the exhaust gas of the methanator and to supply the result to the water tank, in the electrolyzer mode.

4. The reversible solid oxide cell system according to claim 3, wherein the reversible solid oxide cell (rSOC) further comprises:
a heater configured to heat water supplied from the water separator or the water tank to the stack for use in electrolysis in the electrolyzer mode.

5. The reversible solid oxide cell system according to claim 1, wherein the reversible solid oxide cell (rSOC) further comprises:
an oxygen tank configured to receive and store oxygen produced through electrolysis of water in the electrolyzer mode.

6. The reversible solid oxide cell system according to claim 1, wherein a part of an unreacted substance contained in the exhaust gas of the stack in the reversible solid oxide cell is renewable to the reformer, reformed by the reformer and is re-supplied to the stack in the fuel cell mode.

7. The reversible solid oxide cell system according to claim 5, wherein the reversible solid oxide cell (rSOC) further comprises:
a burner configured to burn the exhaust gas of the stack using, as an oxidizing agent, the oxygen in the oxygen tank in the fuel cell mode.

8. The reversible solid oxide cell system according to claim 7, wherein the reversible solid oxide cell (rSOC) further comprises:
a water separator configured to separate water from a burning chamber of the burner,
wherein the water separated by the water separator is used in the electrolyzer mode of the reversible solid oxide cell.

9. The reversible solid oxide cell system according to claim 8, wherein carbon dioxide contained in the exhaust gas of the burner from which moisture is separated by the water separator is stored in the hybrid tank in the fuel cell mode.

10. The reversible solid oxide cell system according to claim 1, wherein a part of the unreacted substance contained in the exhaust gas of the stock in the reversible solid oxide cell is renewable to the stack and used as fuel in the fuel cell mode.

11. The reversible solid oxide cell system according to claim 1, wherein storage capacity of the methane and carbon dioxide in the hybrid tank is changed by movement of the partition.

12. The reversible solid oxide cell system according to claim 1, wherein water is electrolyzed using a renewable energy source supplied from the outside in the electrolyzer mode, and
the reversible solid oxide cell (rSOC) further comprises:
a power compensator configured to constantly regulate the power supplied to the electrolyzer mode using at least one of an external electricity grid or a battery temporarily storing electricity produced in the fuel cell mode, and the renewable energy source.

## Patentansprüche

1. Reversibles Festoxidzellensystem, umfassend:
einen Hybridtank, der dazu eingerichtet ist, Methan und Kohlendioxid, die durch eine verstellbare Trennwand getrennt sind, zu speichern; und
eine reversible Festoxidzelle (rSOC),
wobei die reversible Festoxidzelle (rSOC) umfasst:
einen Methanisierer, der dazu eingerichtet ist, in einem Elektrolyseurmodus Methan durch Reaktion des Kohlendioxids in dem Hybridtank mit Wasserstoff zu erzeugen, der durch Elektrolyse von Wasser unter Verwendung von Elektrizität erzeugt wird, die in einem Stapel generiert wird, und Methan einem ersten Bereich zuzuführen; und
einen Reformer, der dazu eingerichtet ist, in einem Brennstoffzellenmodus das Methan in dem Hybridtank zu reformieren und das Methan dem Stapel zuzuführen.

2. Reversibles Festoxidzellensystem nach Anspruch 1, wobei die reversible Festoxidzelle (rSOC) des Weiteren umfasst:
einen Ejektor, der zwischen dem Methanisierer und dem Stapel bereitgestellt ist und dazu eingerichtet ist, in dem Elektrolyseurmodus Wasserstoff aus dem Stapel mit Kohlendioxid aus dem Hybridtank zu mischen, das resultierende Gemisch zu komprimieren und das Ergebnis dem Methanisierer zuzuführen.

3. Reversibles Festoxidzellensystem nach Anspruch 1, wobei die reversible Festoxidzelle (rSOC) des Weiteren umfasst:
einen Wasserabscheider, der an einer Rückseite des Methanisierers bereitgestellt ist und dazu eingerichtet ist, in dem Elektrolyseurmodus Wasser aus dem Abgas des Methanisierers abzuscheiden und das Ergebnis dem Wassertank zuzuführen.

4. Reversibles Festoxidzellensystem nach Anspruch 3, wobei die reversible Festoxidzelle (rSOC) des Weiteren umfasst:
eine Heizvorrichtung, die dazu eingerichtet ist, in dem Elektrolyseurmodus Wasser, das dem Stapel von dem Wasserabscheider oder von dem Wassertank zugeführt wird, zur Verwendung bei der Elektrolyse zu erwärmen.

5. Reversibles Festoxidzellensystem nach Anspruch 1, wobei die reversible Festoxidzelle (rSOC) des Weiteren umfasst:
einen Sauerstofftank, der dazu eingerichtet ist, in dem Elektrolyseurmodus Sauerstoff, der durch Elektrolyse von Wasser erzeugt wird, zu empfangen und zu speichern.

6. Reversibles Festoxidzellensystem nach Anspruch 1, wobei in dem Brennstoffzellenmodus ein Teil einer unreagierten Substanz, die in dem Abgas des Stapels in der reversiblen Festoxidzelle enthalten ist, für den Reformer erneuerbar ist, durch den Reformer reformiert wird und dem Stapel wieder zugeführt wird.

7. Reversibles Festoxidzellensystem nach Anspruch 5, wobei die reversible Festoxidzelle (rSOC) des Weiteren umfasst:
einen Brenner, der dazu eingerichtet ist, in dem Brennstoffzellenmodus das Abgas des Stapels unter Verwendung des Sauerstoffs in dem Sauerstofftank als ein Oxidationsmittel zu verbrennen.

8. Reversibles Festoxidzellensystem nach Anspruch 7, wobei die reversible Festoxidzelle (rSOC) des Weiteren umfasst:
einen Wasserabscheider, der dazu eingerichtet ist, Wasser aus einer Brennkammer des Brenners abzuscheiden,
wobei das durch den Wasserabscheider abgeschiedene Wasser in dem Elektrolyseurmodus der reversiblen Festoxidzelle verwendet wird.

9. Reversibles Festoxidzellensystem nach Anspruch 8, wobei in dem Brennstoffzellenmodus Kohlendioxid, das in dem Abgas des Brenners enthalten ist, aus dem durch den Wasserabscheider Feuchtigkeit abgeschieden wird, in dem Hybridtank gespeichert wird.

10. Reversibles Festoxidzellensystem nach Anspruch 1, wobei in dem Brennstoffzellenmodus ein Teil der unreagierten Substanz, die in dem Abgas des Stapels in der reversiblen Festoxidzelle enthalten ist, für den Stapel erneuerbar ist und als Brennstoff verwendet wird.

11. Reversibles Festoxidzellensystem nach Anspruch 1, wobei die Speicherkapazität für Methan und Kohlendioxid in dem Hybridtank durch Bewegung der Trennwand geändert wird.

12. Reversibles Festoxidzellensystem nach Anspruch 1, wobei in dem Elektrolyseurmodus Wasser unter Verwendung einer von außen zugeführten erneuerbaren Energiequelle elektrolysiert wird, und
wobei die reversible Festoxidzelle (rSOC) des Weiteren umfasst:
einen Leistungskompensator, der dazu eingerichtet ist, die dem Elektrolyseurmodus zugeführte Leistung unter Verwendung mindestens eines von einem externen Stromnetz und einer Batterie, die vorübergehend Elektrizität speichert, die in dem Brennstoffzellenmodus erzeugt wurde, und der erneuerbaren Energiequelle fortwährend zu regulieren.

## Revendications

1. Système de cellule à oxyde solide réversible comprenant :
un réservoir hybride configuré pour stocker du méthane et du dioxyde de carbone isolés par une cloison réglable ; et
une cellule à oxyde solide réversible (rSOC),
la cellule à oxyde solide réversible (rSOC) comprenant :
un méthaniseur configuré pour produire du méthane par réaction du dioxyde de carbone dans le réservoir hybride avec de l'hydrogène produit par électrolyse de l'eau à l'aide d'électricité générée dans une pile et pour fournir du méthane à une première zone, dans un mode électrolyseur ; et
un reformeur configuré pour reformer le méthane dans le réservoir hybride et pour fournir le méthane à la pile, dans un mode cellule à combustible.

2. Système de cellule à oxyde solide réversible selon la revendication 1, dans lequel la cellule à oxyde solide réversible (rSOC) comprend en outre :
un éjecteur prévu entre le méthaniseur et la pile, et configuré pour mélanger de l'hydrogène provenant de la pile avec du dioxyde de carbone provenant du réservoir hybride, pour comprimer le mélange résultant, et pour fournir le résultat au méthaniseur, en mode électrolyseur.

3. Système de cellule à oxyde solide réversible selon la revendication 1, dans lequel la cellule à oxyde solide réversible (rSOC) comprend en outre :
un séparateur d'eau prévu à l'arrière du méthaniseur et configuré pour séparer l'eau du gaz d'échappement du méthaniseur et pour fournir le résultat au réservoir d'eau, en mode électrolyseur.

4. Système de cellule à oxyde solide réversible selon la revendication 3, dans lequel la cellule à oxyde solide réversible (rSOC) comprend en outre :
un dispositif de chauffage configuré pour chauffer de l'eau fournie par le séparateur d'eau ou le réservoir d'eau à la pile afin de l'utiliser dans l'électrolyse en mode électrolyseur.

5. Système de cellule à oxyde solide réversible selon la revendication 1, dans lequel la cellule à oxyde solide réversible (rSOC) comprend en outre :
un réservoir d'oxygène configuré pour recevoir et stocker l'oxygène produit par électrolyse de l'eau en mode électrolyseur.

6. Système de cellule à oxyde solide réversible selon la revendication 1, dans lequel une partie d'une substance n'ayant pas réagi contenue dans le gaz d'échappement de la pile dans la cellule à oxyde solide réversible est renouvelable vers le reformeur, reformée par le reformeur et fournie à nouveau à la pile en mode cellule à combustible.

7. Système de cellule à oxyde solide réversible selon la revendication 5, dans lequel la cellule à oxyde solide réversible (rSOC) comprend en outre :
un brûleur configuré pour brûler le gaz d'échappement de la pile en utilisant comme agent oxydant l'oxygène contenu dans le réservoir d'oxygène en mode cellule à combustible.

8. Système de cellule à oxyde solide réversible selon la revendication 7, dans lequel la cellule à oxyde solide réversible (rSOC) comprend en outre :
un séparateur d'eau configuré pour séparer l'eau d'une chambre de combustion du brûleur,
dans lequel l'eau séparée par le séparateur d'eau est utilisée de la cellule à oxyde solide réversible en mode électrolyseur.

9. Système de cellule à oxyde solide réversible selon la revendication 8, dans lequel le dioxyde de carbone contenu dans le gaz d'échappement du brûleur dont l'humidité est séparée par le séparateur d'eau est stocké dans le réservoir hybride en mode cellule à combustible.

10. Système de cellule à oxyde solide réversible selon la revendication 1, dans lequel une partie de la substance n'ayant pas réagi contenue dans le gaz d'échappement de la cellule à oxyde solide réversible est renouvelable vers la pile et utilisée comme combustible en mode cellule à combustible.

11. Système de cellule à oxyde solide réversible selon la revendication 1, dans lequel la capacité de stockage du méthane et du dioxyde de carbone dans le réservoir hybride est modifiée par le mouvement de la cloison.

12. Système de cellule à oxyde solide réversible selon la revendication 1, dans lequel l'eau est électrolysée à l'aide d'une source d'énergie renouvelable fournie de l'extérieur en mode électrolyseur, et
la cellule à oxyde solide réversible (rSOC) comprend en outre :
un compensateur de puissance configuré pour réguler en permanence la puissance fournie au mode électrolyseur en utilisant au moins un élément parmi un réseau électrique externe ou une batterie stockant temporairement l'électricité produite en mode cellule à combustible, et la source d'énergie renouvelable.
